# EUROPÄISCHE PATENTSCHRIFT

(11) **EP 1 245 069 B1**
(45) Veröffentlichungstag und Bekanntmachung des Hinweises auf die Patenterteilung: **10.03.2004**
(21) Anmeldenummer: 00993208.8
(22) Anmeldetag: 22.11.2000
(51) Int. Cl.: H02J 7/14

(54) **ZWEI-BATTERIENSYSTEM**
TWO-BATTERY SYSTEM
SYSTEME A DEUX BATTERIES

(30) Priorität: 23.11.1999 DE 19957478
(43) Veröffentlichungstag der Anmeldung: 02.10.2002
(73) Patentinhaber: Volkswagen Aktiengesellschaft, 38436 Wolfsburg (DE)
(72) Erfinder: URLASS, Thorsten, 38474 Tülau (DE)
(74) Vertreter: Effert, Bressel und Kollegen
(86) Internationale Anmeldenummer: PCT/EP2000/011629
(87) Internationale Veröffentlichungsnummer: WO 2001/039350

(56) Entgegenhaltungen:
- EP-A- 0 945 959
- US-A- 3 949 289
- US-A- 5 977 652

## Beschreibung

Die Erfindung betrifft ein Zwei-Batteriensystem und ein Verfahren zum Starten und Lademanagement eines Zwei-Batteriensystems.

Aus der DE 40 28 242 A1 ist ein Zwei-Batteriensystem bekannt, umfassend einen Generator, einen Starter, eine Starterbatterie, eine Bordnetzbatterie, elektrische Verbraucher und einen Starterbatterieschalter, der mit einem Steuergerät verbunden ist. Die elektrischen Verbraucher werden dabei in Primär- und Sekundärverbraucher unterteilt. Unter den Primärverbrauchern werden die für das Start- und Fahrvermögen oder die Fahrzeugsicherheit wesentlichen Verbraucher wie beispielsweise Motorsteuerung und Licht verstanden. Die Sekundärverbraucher sind vorwiegend für den Komfort verantwortliche Verbraucher wie beispielsweise Bordcomputer, Sitzheizung oder HiFi-Anlage. Der Starterbatterieschalter ist zwischen der Starterbatterie und dem übrigen Bordnetz angeordnet, während der Starter direkt mit der Starterbatterie gekoppelt ist. Der Starterbatterieschalter wird über das Steuergerät, abhängig vom Ladezustand der Starterbatterie, der Bordnetzbatterie und der Stromlieferung des Generators, geschaltet. Der Starterbatterieschalter ist durch das Steuergerät während der Fahrt, d.h. wenn der Motor läuft, geschlossen, wenn der Generator Strom liefert, um die beiden Batterien zu laden und gleichzeitig die Verbraucher zu versorgen, oder wenn ein Ladungsausgleich zugunsten der Starterbatterie stattfindet. Bei stehendem Motor ist der Starterbatterieschalter immer geöffnet. Dadurch wird die Starterbatterie weder durch den Ruhestrom der Verbraucher noch durch eine entladene Bordnetzbatterie im Stand oder während der Fahrt entladen. Nachteilig an dem bekannten Zwei-Batteriensystem ist, daß die Verbindung zwischen Starter und Starterbatterie permanent spannungsführend ist, was entsprechende aufwendige Schutzmaßnahmen erfordert. Wird hingegen die Starterleitung spannungslos geschaltet, so sind die bekannten Verfahren zum Start und Lademanagement eines Zwei-Batteriensystems nicht anwendbar.

Der Schutz von Messgeräten und Verbrauchern vor hohen Strömen zwischen zwei Batterien eines Camper-Fahrzeugs, der Starterbatterie und der Camper-Batterie, während des Startvorgangs ist auch Gegenstand von US 3 949 289. Die Verbraucher des Fahrzeugs belasten jedoch mit ihrem Ruhestrom die Batterien, so dass keine Widerstartfähigkeit sicher gestellt ist.

Zur Realisierung der Widerstartfähigkeit sieht US 5 977 652 die Entkopplung von Starterund Bordnetz-Batterie vor, wobei die Belastung einer der beiden Batterien auf ein Minimum zu begrenzen ist. Ein Starten ist jedoch nicht mehr möglich, wenn die Starter-Batterie vollständig entladen ist, da der hohe Starterstrom nicht über die Steuereinheit, die zwischen den beiden Batterien geschaltet ist, fliessen könnte.Daher ist eine Versorgung des Starters durch die Bordnetz-Batterie nicht möglich.

Der Erfindung liegt daher das technische Problem zugrunde, ein Verfahren zum Starten und Lademanagement mit einem Zwei-Batteriensystem mit abgesicherter Starterleitung und ein Zwei-Batteriensystem zur Durchführung des Verfahrens zu schaffen.

Die Lösung des technischen Problems ergibt sich durch die Gegenstände mit den Merkmalen der Patentansprüche 1 und 5. Weitere vorteilhafte Ausgestaltungen der Erfindung ergeben sich aus den Unteransprüchen.

Durch die Anordnung der elektronischen Polklemmen zwischen der Starterbatterie und dem Starter und der Bordnetzbatterie und dem Starter ist die Steuerleitung mit Ausnahme der unmittelbaren Startphase spannungslos schaltbar. Dabei sind die startrelevanten Verbraucher fest der Starterbatterie und die Bordnetzverbraucher fest der Bordnetzbatterie zugeordnet. Zwischen der Bordnetzbatterie und der Starterbatterie ist ein Leistungsschalter angeordnet, der durch ein die Generatorerregung erfassendes Signal schaltbar ist. Dadurch ist ein sehr einfaches Start- und Lademanagement für ein Zwei-Batteriensystem möglich, mittels dessen sowohl sehr große Motoren zuverlässig zu starten sind und sehr lange Standzeiten möglich sind. Im abgestellten Zustand ist die Starterbatterie von der Bordnetzbatterie über den offenen Leistungsschalter und die gesperrten elektronischen Polklemmen elektrisch entkoppelbar, so daß die Starterbatterie nicht durch die Bordnetzverbraucher belastet wird, sondern nur den sehr geringen Ruhestrombedarf der startrelevanten Verbraucher decken muß. Da die Ruheströme der startrelevanten Verbraucher im mA-Bereich liegen, sind Standzeiten über mehrere Monate hinweg möglich. Im Fahrbetrieb belasten zwar die startrelevanten Verbraucher die Starterbatterie, die Ströme im Bereich von 10-16 A werden jedoch ohne Probleme durch den erregten Generator kompensiert. Nach dem erfolgten Startvorgang wird die elektronische Polklemme wieder gesperrt und nach der Erregung des Generators der Leistungsschalter geschlossen. Bei voller Erregung des Generators liefert dieser eine Ausgangsspannung von ca. 14,4 V. Dadurch existiert stets eine Potentialdifferenz zwischen dem Generatoreinspeisungspunkt und den beiden Batterien, unabhängig davon, ob diese vollgeladen oder entladen sind. Dadurch ist gewährleistet, daß auch bei der Parallelschaltung der beiden Batterien keine Querströme von einer Batterie zur anderen fließen können, die ansonsten gegebenenfalls den Leistungsschalter zerstören könnten. Durch den Leistungsschalter läßt sich somit ein einfaches Lademanagement für die Starterbatterie realisieren, wobei sichergestellt ist, daß der Strom nur vom Generator zu den beiden Batterien fließen kann.

Je nach Anwendungsgebiet sind dabei verschiedene Schaltungskonzepte möglich. Zum Starten großer Motoren, die einen großen Starterstrom benötigen, wird prinzipiell aus beiden Batterien parallel gestartet. Dabei wird die Belastung der Starterbatterie im Startvorgang hingenommen, da diese im Regelfall bei Erregung des Generators wieder ausreichend geladen wird. Bei kleineren Motoren steht hingegen die möglichst geringe Belastung der Starterbatterie im Vordergrund. Hierzu wird standardmäßig nur aus der Bordnetzbatterie gestartet. Ist hingegen die Bordnetzbatterie entladen und die Starterbatterie geladen, so wird aus der Starterbatterie gestartet. Ist hingegen die Starterbatterie entladen, so muß ein Fremdstart durchgeführt werden, selbst wenn die Bordnetzbatterie geladen ist, da die startrelevanten Verbraucher nicht mehr versorgt werden.

In einer weiteren bevorzugten Ausführungsform wird daher der Leistungsschalter durch ein Bordnetzsteuergerät beaufschlagt. Ist dann die Bordnetzbatterie geladen und die Starterbatterie entladen, so schaltet das Bordnetzsteuergerät den Leistungsschalter durch, so daß dann die Bordnetzbatterie die Spannungsversorgung der startrelevanten Verbraucher in der Startphase übernimmt. Anschließend kann dann aus der Bordnetzbatterie gestartet werden, wobei die elektronische Polkiemme der Starterbatterie vorzugsweise gesperrt bleibt, da ansonsten ein Teil des Starterstromes über den Leistungsschalter fließen würde und diesen gegebenenfalls zerstören könnte.

Sind hingegen beide Batterien entladen, so muß ein Fremdstart mittels einer externen Batterie durchgeführt werden, wobei dann nur die elektronische Polklemme der Starterbatterie durchgeschaltet wird.

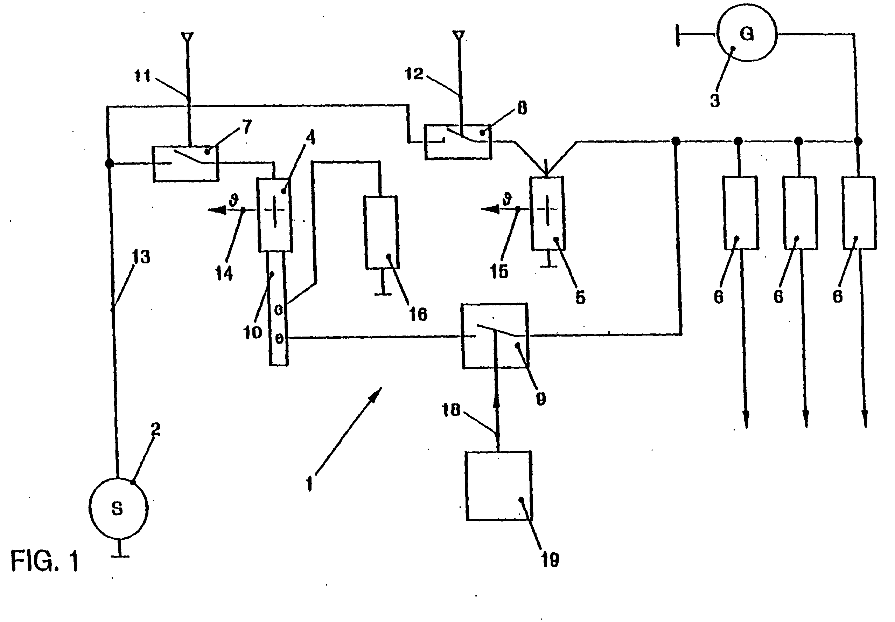

Die Erfindung wird nachfolgend anhand eines bevorzugten Ausführungsbeispiels näher erläutert. Die einzige Figur zeigt ein schematisches Blockschaltbild eines erfindungsgemäßen Zwei-Batteriensystems.

Das Zwei-Batteriensystem 1 umfaßt einen Starter 2, einen Generator 3, eine Starterbatterie 4, eine Bordnetzbatterie 5 und bordnetzspezifische Verbraucher 6, die fest mit der Bordnetzbatterie 5 verbunden sind. Zwischen dem Pluspol der Starterbatterie 4 und dem Starter 2 ist eine elektronische Polklemme 7 angeordnet. Ebenso ist zwischen dem Pluspol der Bordnetzbatterie 5 und dem Starter 2 eine elektronische Polklemme 8 angeordnet. Zwischen dem Generator 3 bzw. dem Pluspol der Bordnetzbatterie 5 und dem Pluspol der Starterbatterie 4 ist ein Leistungsschalter 9 angeordnet, der über einen Abgriff 10 mit der Starterbatterie 4 verbunden ist. Die elektronische Polklemme 7 ist mit einem Steuereingang 11, und die elektronische Polklemme 8 ist mit einem Steuereingang 12 ausgebildet, wobei die zugeführten Signale eine logische Verknüpfung eines Startsignals von einem mechanischen Zündanlaßschloß bzw. einem Startfreigabesteuergerät und dem Ladezustand der beiden Batterien sind. Zwischen Starter 2 und den elektronischen Polklemmen 7,8 liegt die Starterleitung 13, die durch die beiden Polklemmen 7, 8 mit Ausnahme der Starterphase spannungslos geschaltet wird. Des weiteren sind der Starterbatterie 4 und der Bordnetzbatterie 5 jeweils eine Temperaturüberwachungseinrichtung 14, 15 zugeordnet. Die startrelevanten Verbraucher 16 sind fest der Starterbatterie 4 zugeordnet. Der Leistungsschalter 9 ist über eine Steuerleitung 18 mit einem Bordnetzsteuergerät 19 verbunden.

Im Stillstand des Kraftfahrzeuges sind die elektronischen Polklemmen 7, 8 und der Leistungsschalter 9 offen. Die startrelevanten Verbraucher 16 sind fest der Starterbatterie 4 zugeordnet. Die startrelevanten Verbraucher 16 umfassen dabei das Motorsteuergerät, das Kombiinstrument und gegebenenfalls ein Airbagsteuergerät. Ist das Kraftfahrzeug darüber hinaus mit einem elektronischen Zündanlaßschloß ausgebildet, so umfassen die startrelevanten Verbraucher 16 auch ein Startfreigabesteuergerät. Aufgrund der Ausbildung mit der elektronischen Polklemme 7 sind die startrelevanten Verbraucher 16 über den Abgriff 10 mit der Starterbatterie 4 verbunden, der gleichzeitig als Fremdstarterhilfepunkt fungiert. Über die gesperrten elektronischen Polklemmen 7, 8 ist die Starterleitung 13 spannungslos und die Starterbatterie 4 von der Bordnetzbatterie 5 und den bordnetzspezifischen Verbrauchern 6 entkoppelt. Die Starterbatterie 4 wird nur durch den Ruhestrom der startrelevanten Verbraucher 16 belastet.

Vor Einleitung des Startvorganges überprüft zunächst das Bometzsteuergerät 19 den Ladezustand der Bordnetzbatterie 5 und der Starterbatterie 4. Ergibt diese Prüfung einen ausreichenden Ladezustand beider Batterien, so wird nur die elektrische Polklemme 8 durchgeschaltet. Die startrelevanten Verbraucher 16 werden dann von der Starterbatterie 4 versorgt, und der Starterstrom wird ausschließlich aus der Bordnetzbatterie 5 geliefert. Ist hingegen die Bordnetzbatterie 5 entladen und die Starterbatterie 4 geladen, so wird nur die elektronische Polklemme 7 durchgeschaltet, so daß die Starterbatterie 4 sowohl die startrelevanten Verbraucher 16 als auch den Starter 2 mit Spannung versorgt. Ist hingegen die Bordnetzbatterie 5 geladen und die Starterbatterie 4 entladen, so schließt das Bordnetzsteuergerät 19 den Leistungsschalter 9. Dadurch kann die Bordnetzbatterie 5 die startrelevanten Verbraucher 16 in der Startphase versorgen. Der Starter 2 wird durch Schalten der elektronischen Polklemme 8 aus der Bordnetzbatterie 5 versorgt. Sind hingegen beide Batterien entladen, so muß mittels einer externen Batterie ein Fremdstart durchgeführt werden, die dazu an den Abgriff 10 angeschlossen wird. Dadurch werden die startrelevanten Verbraucher 16 versorgt. Durch Durchschalten der elektronischen Polklemme 7 kann dann die externe Batterie den Starter 2 bestromen.

Nach dem Startvorgang werden die durchgeschalteten elektronischen Polklemmen 7,8 wieder gesperrt und somit die Starterleitung 13 spannungslos geschaltet. Dann erfaßt das Bometzsteuergerät 19 die Erregung des Generators 3 und schaltet den Leistungsschalter 9, falls dieser nicht bereits geschlossen war. Dadurch kann die Starterbatterie 4 über den Generator 3 wieder geladen werden.

### BEZUGSZEICHENLISTE

- 1): Zwei-Batteriensystem
- 2): Starter
- 3): Generator
- 4): Starterbatterie
- 5): Bordnetzbatterie
- 6): bordnetzspezifische Verbraucher
- 7): Polklemme
- 8): Polklemme
- 9): Leistungsschalter
- 10): Abgriff
- 11): Steuereingang
- 12): Stuereingang
- 13): Starterleitung
- 14): Temperaturüberwachungseinrichtung
- 15): Temperaturüberwachungseinrichtung
- 16): startrelevante Verbraucher
- 18): Steuerleitung
- 19): Bordnetzsteuergerät

## Patentansprüche

1. Zwei-Batteriensystem umfassend einen Starter (2), einen Generator (3), eine Starterbatterie (4), eine Bordnetzbatterie (5), bordnetzspezifische Verbraucher (6) und startrelevante Verbraucher (16), wobei zwischen dem Starter (2) und der Starterbatterie (4) eine erste elektronische Polklemme (7) und zwischen dem Starter (2) und der Bordnetzbatterie (5) eine zweite elektronische Polklemme (8) angeordnet ist, wobei zwischen der Bordnetzbatterie (5) und der Starterbatterie (4) ein Leistungsschalter (9) angeordnet ist,
**dadurch gekennzeichnet, daß**
der Leistungsschalter (9) durch ein die Erregung des Generators (3) erfassenden Signals steuerbar ist, wobei der Leistungsschalter (9) bei erregtem Generator (3) geschlossen ist, die bordnetzspezifischen Verbraucher (6) fest der Bordnetzbatterie (5) und die startrelevanten Verbraucher (16) fest der Starterbatterie (4) zugeordnet sind und bei einem Startvorgang beide elektronischen Polklemmen (7, 8) durchgeschaltet sind, die nach Beendigung des Startvorganges wieder gesperrt sind.

2. Zwei-Batteriensystem umfassend einen Starter (2), einen Generator (3), eine Starterbatterie (4), eine Bordnetzbatterie (5), bordnetzspezifische Verbraucher (6) und startrelevante Verbraucher (16), wobei zwischen dem Starter (2) und der Starterbatterie (4) eine erste elektronische Polklemme (7) und zwischen dem Starter (2) und der Bordnetzbatterie (5) eine zweite elektronische Polklemme (8) angeordnet ist, wobei zwischen der Bordnetzbatterie (5) und der Starterbatterie (4) ein Leistungsschalter (9) angeordnet ist,
**dadurch gekennzeichnet, daß**
dem Leistungsschalter (9) ein Bordnetzsteuergerät (19) zugeordnet ist, die bordnetzspezifischen Verbraucher (6) fest der Bordnetzbatterie (5) und die startrelevanten Verbraucher (16) fest der Starterbatterie (4) zugeordnet sind, wobei zur Einleitung des Startvorganges über das Bordnetzsteuergerät (19) die Ladezustände der Bordnetzbatterie (5) und der Starterbatterie (4) überprüfbar sind, wobei bei einem ausreichenden Ladezustand beider Batterien nur die elektronische Polklemme (8) der Bordnetzbatterie durchgeschaltet wird, bei einem ausreichenden Ladezustand der Starterbatterie (4) und einem unzureichendem Ladezustand der Bordnetzbatterie (5) nur die elektronische Polklemme (7) der Starterbatterie (4) durchgeschaltet wird und bei einem ausreichenden Ladezustand der Bordnetzbatterie (5) und einem unzureichenden Ladezustand der Starterbatterie (4) der Leistungsschalter (9) durch das Bordnetzsteuergerät (19) geschlossen wird, bevor die elektronische Polklemme (8) der Bordnetzbatterie (5) durchgeschaltet wird, die elektronische Polklemme (7 oder 8) nach Beendigung des Startvorganges wieder gesperrt ist, wobei der Leistungsschalter (9) bei einer Erfassung der Erregung des Generators stets geschlossen wird.

3. Zwei-Batteriensystem nach Anspruch 1 oder 2, **dadurch gekennzeichnet, dass** mittels des Bordnetzsteuergerätes (19) die elektronischen Polklemmen (7, 8) und/oder der Leistungsschalter (9) ansteuerbar sind.

4. Zwei-Batteriensystem nach Anspruch 1 bis 3, dadurch daß die startrelevanten Verbraucher (16) mindestens ein Motorsteuergerät und ein Kombiinstrument umfassen.

5. Zwei-Batteriensystem nach Anspruch 4, **dadurch gekennzeichnet, daß** die startrelevanten Verbraucher (16) ein Startfreigabesteuergerät und/oder ein Airbagsteuergerät umfassen.

6. Zwei- Batteriensystem nach einem der vorangegangenen Ansprüche, **dadurch gekennzeichnet, daß** der Leistungsschalter (9) über einen Abgriff (10) mit der Starterbatterie (4) verbunden ist.

7. Verfahren zum Starten eines Kraftfahrzeuges mit einem Zwei-Batteriensystem nach Anspruch 1, **dadurch gekennzeichnet, daß** beide elektronische Polklemmen (7, 8) durchgeschaltet werden, nach Beendigung des Startvorganges wieder gesperrt werden und nach Erfassung der Erregung des Generators (3) der Leistungsschalter (9) geschlossen wird.

8. Verfahren zum Starten eines Kraftfahrzeuges mit einem Zwei-Batteriensystem nach Anspruch 2, **dadurch gekennzeichnet, daß** dem Leisiungsschafter (9) ein Bordnetzsteuergerät (19) zugeordnet ist, die bordnetzspezifischen Verbraucher (6) fest der Bordnetzbatterie (5) und die startrelevanten Verbraucher (16) fest der Starterbatterie (4) zugeordnet sind, wobei zur Einleitung des Startvorganges Ober das Bordnetzsteuergerät (19) die Ladezustände der Bordnetzbatterie (5) und der Starterbatterie (4) überprüfbar sind, wobei bei einem ausreichenden Ladezustand beider Batterien nur die elektronische Polklemme (8) der Bordnetzbatterie durchgeschaltet wird, bei einem ausreichenden Ladezustand der Starterbatterie (4) und einem unzureichendem Ladezustand der Bordnetzbatterie (5) nur die elektronische Polklemme (7) der Starterbatterie (4) durchgeschaltet wird und bei einem ausreichenden Ladezustand der Bordnetzbatterie (5) und einem unzureichenden Ladezustand der Starterbatterie (4) der Leistungsschalter (9) durch das Bordnetzsteuergerät (19) geschlossen wird, bevor die elektronische Polklemme (8) der Bordnetzbatterie (5) durchgeschaltet wird,
nach Beendigung des Startvorganges die durchgeschaltete elektronische Polklemme (7, 8) wieder gesperrt wird, wobei der Leistungsschalter (9) bei einer Erfassung der Erregung des Generators stets geschlossen wird.

9. Verfahren zum Starten eines Kraftfahrzeuges nach Anspruch 7 oder 8, **dadurch gekennzeichnet, daß** das zur Durchführung eines Fremdstartes mittels einer externen Batterie die elektronische Polklemme (7) durchgeschaltet wird.

## Claims

1. Two-battery system comprising a starter (2), a generator (3), a starter battery (4), an on-board power system battery (5), loads (6) which are specific to the on-board power system and loads (16) which relate to starting, a first electronic pole terminal (7) being arranged between the starter (2) and the starter battery (4), and a second electronic pole terminal (8) being arranged between the starter (2) and the on-board power system battery (5), a power switch (9) being arranged between the on-board power system battery (5) and the starter battery (4), **characterized in that** the power switch (9) can be controlled by a signal which registers the excitation of the generator (3), the power switch (9) being closed when the generator (3) is excited, the loads (6) which are specific to the on-board power system being permanently assigned to the on-board power system battery (5) and the loads (16) which relate to starting being permanently assigned to the starter battery (4), and in the case of a starting operation both electronic pole terminals (7, 8) being connected through and being disabled again after the starting operation has finished.

2. Two-battery system comprising a starter (2), a generator (3), a starter battery (4), an on-board power system battery (5), loads (6) which are specific to the on-board power system and loads (16) which relate to starting, a first electronic pole terminal (7) being arranged between the starter (2) and the starter battery (4), and a second electronic pole terminal (8) being arranged between the starter (2) and the on-board power system battery (5), a power switch (9) being arranged between the on-board power system battery (5) and the starter battery (4), **characterized in that** an on-board power system control unit (19) is assigned to the power switch (9), the loads (6) which are specific to the on-board power system are permanently assigned to the on-board power system battery (5) and the loads (16) which relate to starting are permanently assigned to the starter battery (4), in which, in order to initiate the starting operation, the charge states of the on-board power system battery (5) and of the starter battery (4) can be checked by means of the on-board power system control unit (19), in which, when there is a sufficient charge state of both batteries, only the electronic pole terminal (8) of the on-board power system battery is connected through, when there is a sufficient charge state of the starter battery (4) and an insufficient charge state of the on-board power system battery (5), only the electronic pole terminal (7) of the starter battery (4) is connected through, and, when there is a sufficient charge state of the on-board power system battery (5) and an insufficient charge state of the starter battery (4), the power switch (9) is closed by the on-board power system control unit (19) before the electronic pole terminal (8) of the on-board power system battery (5) is connected through, and the electronic pole terminal (7 or 8) is disabled again after the starting operation has finished, the power switch (9) being always closed when the excitation of the generator is registered.

3. Two-battery system according to Claim 1 or 2, **characterized in that** the electronic pole terminals (7, 8) and/or the power switch (9) can be driven by means of the on-board power system control unit (19).

4. Two-battery system according to Claims 1 to 3, **characterized in that** the loads (16) which relate to starting comprise at least one engine control unit and one instrument cluster.

5. Two-battery system according to Claim 4, **characterized in that** the loads (16) which relate to starting comprise a start-enable control unit and/or an airbag control unit.

6. Two-battery system according to one of the preceding claims, **characterized in that** the power switch (9) is connected to the starter battery (4) via a tap (10).

7. Method for starting a motor vehicle having a two-battery system according to Claim 1, **characterized in that** both electronic pole terminals (7, 8) are connected through and are disabled again after the starting operation has finished, and the power switch (9) is closed after the excitation of the generator (3) is registered.

8. Method for starting a motor vehicle having a two-battery system according to Claim 2, **characterized in that** an on-board power system control unit (19) is assigned to the power switch (9), the loads (6) which are specific to the on-board power system are permanently assigned to the on-board power system battery (5) and the loads (16) which relate to starting are permanently assigned to the starter battery (4), in which, in order to initiate the starting operation, the charge states of the on-board power system battery (5) and of the starter battery (4) can be checked by means of the on-board power system control unit (19), in which, when there is a sufficient charge state of both batteries, only the electronic pole terminal (8) of the on-board power system battery is connected through, when there is a sufficient charge state of the starter battery (4) and an insufficient charge state of the on-board power system battery (5), only the electronic pole terminal (7) of the starter battery (4) is connected through, and, when there is a sufficient charge state of the on-board power system battery (5) and an insufficient charge state of the starter battery (4), the power switch (9) is closed by the on-board power system control unit (19) before the electronic pole terminal (8) of the on-board power system battery (5) is connected through, and the connected-through electronic pole terminal (7, 8) is disabled again after the starting operation has finished, the power switch (9) being always closed when the excitation of the generator is registered.

9. Method for starting a motor vehicle according to Claim 7 or 8, **characterized in that** the electronic pole terminal (7) is connected through in order to start the engine by the external means using an external battery.

## Revendications

1. Système à deux batteries comportant un démarreur (2), un générateur (3), une batterie de démarreur (4), une batterie du réseau embarqué (5), des consommateurs spécifiques du réseau embarqué (6) et des consommateurs relevant du démarrage (16), une première borne électronique (7) de pôle étant disposée entre le démarreur (2) et la batterie de démarreur (4) et une deuxième borne électronique (8) de pôle étant disposée entre le démarreur (2) et la batterie du réseau embarqué (5), un commutateur de puissance (9) étant disposé entre la batterie du réseau embarqué (5) et la batterie de démarreur (4), **caractérisé en ce que** le commutateur de puissance (9) peut être commandé par un signal enregistrant l'excitation du générateur (3), le commutateur de puissance (9) étant fermé lorsque le générateur (3) est excité, les consommateurs spécifiques du réseau embarqué (6) correspondant explicitement à la batterie du réseau embarqué (5) et les consommateurs relevant du démarrage (16) correspondant explicitement à la batterie de démarreur (4) et les deux bornes électroniques (7, 8) de pôle étant commutées en conduction lors d'un processus de démarrage et à nouveau fermées après la fin du processus de démarrage.

2. Système à deux batteries comportant un démarreur (2), un générateur (3), une batterie de démarreur (4), une batterie du réseau embarqué (5), des consommateurs spécifiques du réseau embarqué (6) et des consommateurs relevant du démarrage (16), une première borne électronique (7) de pôle étant disposée entre le démarreur (2) et la batterie de démarreur (4) et une deuxième borne électronique (8) de pôle étant disposée entre le démarreur (2) et la batterie du réseau embarqué (5), un commutateur de puissance (9) étant disposé entre la batterie du réseau embarqué (5) et la batterie de démarreur (4), **caractérisé en ce qu'**au commutateur de puissance (9) correspond un équipement de commande du réseau embarqué (19), les consommateurs spécifiques du réseau embarqué (6) correspondent explicitement à la batterie du réseau embarqué (5) et les consommateurs relevant du démarrage (16) correspondent explicitement à la batterie de démarreur (4), les états de charge de la batterie du réseau embarqué (5) et de la batterie de démarreur (4) pouvant être vérifiés pour engager le processus de démarrage au moyen de l'équipement de commande du réseau embarqué (19), seule la borne électronique (8) de pôle de la batterie du réseau embarqué étant commutée en conduction lorsque l'état de charge des deux batteries est suffisant, seule la borne électronique (7) de pôle de la batterie de démarreur (4) étant commutée en conduction lorsque l'état de charge de la batterie de démarreur (4) est suffisant et l'état de charge de la batterie du réseau embarqué (5) est insuffisant, et le commutateur de puissance (9) étant fermé par l'équipement de commande du réseau embarqué (19) lorsque l'état de charge de la batterie du réseau embarqué (5) est suffisant et l'état de charge de la batterie de démarreur (4) est insuffisant, avant de mettre en conduction la borne électronique (8) de pôle de la batterie du réseau embarqué (5), de fermer à nouveau la borne électronique (7 ou 8) de pôle après la fin du processus de démarrage, le commutateur de puissance (9) étant toujours refermé lors de l'enregistrement de l'excitation du générateur.

3. Système à deux batteries selon la revendication 1 ou 2, **caractérisé en ce que** les bornes électroniques (7, 8) de pôle et/ou le commutateur de puissance (9) peuvent être commandés au moyen de l'équipement de commande du réseau embarqué (19).

4. Système à deux batteries selon les revendications 1 à 3, **caractérisé en ce que** les consommateurs relevant du démarrage (16) comportent au moins un équipement de commande de moteur et un instrument combiné.

5. Système à deux batteries selon la revendication 4, **caractérisé en ce que** les consommateurs relevant du démarrage (16) comportent un équipement d'autorisation de démarrage et/ou un équipement de commande de coussin gonflable.

6. Système à deux batteries selon une des revendications précédentes, **caractérisé en ce que** le commutateur de puissance (9) est relié à la batterie de démarreur (4) à travers une prise (10).

7. Procédé pour le démarrage d'un véhicule automobile avec un système à deux batteries selon la revendication 1, **caractérisé en ce que** les deux bornes électroniques (7, 8) de pôle sont commutées en conduction, qu'elles sont de nouveau fermées après la fin du processus de démarrage et que le commutateur de puissance (9) est refermé après l'enregistrement de l'excitation du générateur (3).

8. Procédé pour le démarrage d'un véhicule automobile avec un système à deux batteries selon la revendication 2, **caractérisé en ce qu'**au commutateur de puissance (9) correspond un équipement de commande du réseau embarqué (19), les consommateurs spécifiques du réseau embarqué (6) correspondent explicitement à la batterie du réseau embarqué (5) et les consommateurs relevant du démarrage (16) correspondent explicitement à la batterie de démarreur (4), les états de charge de la batterie du réseau embarqué (5) et de la batterie de démarreur (4) pouvant être vérifiés pour engager le processus de démarrage au moyen de l'équipement de commande du réseau embarqué (19), seule la borne électronique (8) de pôle de la batterie du réseau embarqué étant commutée en conduction lorsque l'état de charge des deux batteries est suffisant, seule la borne électronique (7) de pôle de la batterie de démarreur (4) étant commutée en conduction lorsque l'état de charge de la batterie de démarreur (4) est suffisant et l'état de charge de la batterie du réseau embarqué (5) est insuffisant, et le commutateur de puissance (9) étant fermé par l'équipement de commande du réseau embarqué (19) lorsque l'état de charge de la batterie du réseau embarqué (5) est suffisant et l'état de charge de la batterie de démarreur (4) est insuffisant, avant de mettre en conduction la borne électronique (8) de pôle de la batterie du réseau embarqué (5), de fermer à nouveau après la fin du processus de démarrage, la borne électronique (7, 8) de pôle mise en conduction, le commutateur de puissance (9) étant toujours refermé lors d'un enregistrement de l'excitation du générateur.

9. Procédé pour le démarrage d'un véhicule automobile selon la revendication 7 ou 8, **caractérisé en ce que** la borne électronique (7) de pôle est commutée en conduction pour réaliser un démarrage de l'extérieur au moyen d'une batterie externe.
